(19) **Europäisches Patentamt**

**European Patent Office**

**Office européen des brevets**

(11) Publication number: **0 500 338 B1**

(12) **EUROPEAN PATENT SPECIFICATION**

(45) Date of publication of patent specification: **10.05.95**  (51) Int. Cl.⁶: **B60C 1/00**

(21) Application number: **92301353.6**

(22) Date of filing: **19.02.92**

(54) **Radial tyre for cars equipped with anti-lock braking system.**

(30) Priority: **21.02.91 JP 27113/91**

(43) Date of publication of application:
**26.08.92 Bulletin 92/35**

(45) Publication of the grant of the patent:
**10.05.95 Bulletin 95/19**

(84) Designated Contracting States:
**DE FR GB**

(56) References cited:
**EP-A- 0 216 588**
**EP-A- 0 254 766**
**EP-A- 0 263 885**
**EP-A- 0 349 472**
**US-A- 4 745 150**

(73) Proprietor: **SUMITOMO RUBBER INDUSTRIES
LIMITED**
**1-1 Tsutsuicho 1-chome**
**Chuo-ku**
**Kobe-shi**
**Hyogo-ken (JP)**

(72) Inventor: **Saito, Yuichi**
**1-4-5-404 Hongjo-cho,**
**Higashinada-ku**
**Kobe-shi,**
**Hyogo-ken (JP)**
Inventor: **Watanuma, Susumu**
**2-523 Bireji,**
**3-1-2 Minatojimanakamachi,**
**Chuo-ku**
**Kobe-shi,**
**Hyogo-ken (JP)**
Inventor: **Takatsu, Sumio**
**Kobu-Ryo,**
**1-1-23 Hinokuchi-cho**
**Nishinomiyashi,**
**Hyogo-ken (JP)**

(74) Representative: **Stewart, Charles Geoffrey**
**SP TYRES UK LIMITED**
**Technical Division**
**Fort Dunlop,**
**Erdington,**
**Birmingham B24 9OT (GB)**

## Description

The present invention relates to a radial tyre. More particularly, it relates to a radial tyre particularly for cars having an anti-lock braking system (ABS).

Passenger cars now have extremely high performance because many improvements have been made, for example, the power output of engines is enhanced and body weight is reduced. Also, starting, accelerating and cornering properties are significantly improved. With the development of these running performances, improved braking has also become necessary so that the cars can safely stop under any road condition such as a dry road surface, a wet road surface, road surfaces having various friction coefficients and, further, extremely slippery road surfaces (e.g. iced or snow surfaces).

From the view point of the braking system of cars, in a conventional braking system, the wheels and tyres lock immediately when the brakes are applied on a road surface having a very low friction coefficient such as an ice surface, and the car then becomes out of control. This is extremely dangerous. An Anti-lock braking system (ABS) which has been employed since 1978 is a mechanical or electrical system in which the brakes are loosened as soon as the wheels lock. The ABS can safely stop cars under any road condition without loss of vehicle control.

However, in conventional tyre tread rubbers, there has been virtually no development for ABS and the improvements in braking in the above conditions of locking have been made for conventional braking systems. For example, some improvement in braking performance on locking was made by using styrene-butadiene rubber (SBR) or SBR having high styrene content, or by increasing the carbon content or oil content to enhance hysteresis loss of the tread rubber.

However, if either formulation method as described above is employed and the braking property on locking is improved, the rolling resistance of the tyres becomes inferior in normal running, which results in an increased fuel consumption of the car. Also particularly, with an increase of the carbon or oil content, the wear resistance becomes inferior. Further, with an increase of the tan $\delta$ peak temperature, the rubber becomes hard at low winter temperatures, and then the grip property becomes inferior. In other words, to improve performance at locking sacrificed three or more performance factors during normal running. However, in cars equipped with ABS the tyre performance at wheel locking as described above is not necessarily required, and there are thus special tyre performance features which are peculiar to ABS.

A main object of the present invention is to provide a tyre which can show maximum anti-lock braking properties and also reduced rolling resistance during normal running.

This object as well as other objects and advantages of the present invention will become apparent to those skilled in the art from the following description.

According to the present invention there is provided a radial tyre for cars equipped with an anti-lock braking system comprising a tread and a sidewall, characterised in that the tread is formed by a rubber compound containing rubber or rubbers selected only from the group consisting of natural rubber, isoprene rubber and butadiene rubber, wherein said tread rubber has a tan $\delta$ peak value at a temperature ($T_p$) in the range of - 60 to -40°C in a viscoelasticity (tan $\delta$) temperature distribution curve and an acetone extraction of not more than 22%.

Suitable rubber components for the tread rubber in the radial tyre of the present invention include, for example, natural rubber (NR), isoprene rubber (IR) and butadiene rubber (BR) and one or more of these may be used.

The tread rubber used in the present invention may be prepared by a normal method, that is by appropriately selecting the rubber components, crosslinking agents, amounts of crosslinking agents and other additives and the vulcanising times.

Carbon black is normally formulated in the rubber composition as a reinforcing material. The carbon black preferably has a particle size of 15 to 35 $\mu$m. If the particle size is less than 15 $\mu$m, heat generation properties and rolling resistance become inferior. If the particle size is more than 35 $\mu$m, wear resistance and grip property are lessened.

The tread rubber used in the present invention has a viscoelasticity tan $\delta$ peak temperature ($T_p$) of -60 to -40°C, more preferably -57 to -43°C in a viscoelasticity (tan $\delta$) temperature distribution curve. The above viscoelasticity (tan $\delta$) temperature distribution curve is obtained by measuring at a frequency of 10 HZ, an initial strain of 10%, an amplitude of ±0.25% and a rate of increasing temperature of 2°C/min, using a viscoelastic spectrometer (manufactured by Iwamoto Seisakusho K.K.). If $T_p$ is less than -60°C, wet grip becomes inferior and, if it exceeds -40°C, rolling resistance becomes inferior.

Further, the tread rubber used in the present invention has an acetone extraction of not more than 22%, more preferably not more than 15%. The acetone extraction (%) is obtained as follows. Firstly, the weight of a finely cut tread rubber ($W_1$) is measured and the rubber is extracted with an acetone solvent in a Soxhlet extractor for 15 hours. The sample is taken from the extractor and dried in an oven at 60°c for one hour, and then the weight of the sample ($W_2$) after extraction is measured. Thus, the acetone extraction (%) can be calculated from the formula: 100 x ($W_1$ - $W_2$)/$W_1$. If the acetone extraction exceeds 22%, rolling resistance is inferior, and it is not preferred.

The radial tyre of the present invention may be produced by using the above tread rubber according to a conventional method. The radial tyre thus obtained generally has a maximum design load of 1000 kg, and is suitable for cars equipped with ABS (e.g. passenger cars, estate cars, etc).

As described above, a radial tyre using the tread rubber of the present invention shows high maximum anti-lock braking properties in cars equipped with ABS and has low rolling resistance.

The following Examples and Comparative Examples further illustrate the present invention in detail but are not to be construed to limit the scope thereof. In the Examples, all "parts" and "percents" are by weight unless otherwise states.

Examples 1 to 4 and Comparative Examples 1 to 6

A tread rubber was prepared from the ingredients as shown in Table 1 and then formed into a tyre.

Further, the $T_p$ value of the tread rubber, acetone, rolling resistance index and brake index of the radial tyre were measured. The results are shown in Table 1.

Table 1

| Ingredients | Example 1 | Example 2 | Example 3 | Example 4 | Comp. Example 1 |
|-------------|-----------|-----------|-----------|-----------|-----------------|
| Natural rubber | 100 | 100 | 100 | 60 | – |
| High-cis BR | – | – | – | 40 | – |
| SBR | – | – | – | – | 137.5[1] |
| ISAF carbon | 90 | 70 | 50 | 70 | 75 |
| Aroma oil | 45 | 12 | – | 12 | – |
| Wax | 2 | 2 | 2 | 2 | 2 |
| Antioxidant[4] | 2 | 2 | 2 | 2 | 2 |
| Stearic acid | 2 | 2 | 2 | 2 | 2 |
| Zinc white | 3 | 3 | 3 | 3 | 3 |
| Sulfur | 1.75 | 1.75 | 1.75 | 1.75 | 1.75 |
| Vulcanizing[5] accelerator | 1 | 1 | 1 | 1 | 1 |

EP 0 500 338 B1

## Table 1 (continued)

|  | Example 1 | Example 2 | Example 3 | Example 4 | Comp. Example 1 |
|---|---|---|---|---|---|
| **Tread rubber** | | | | | |
| $T_p$ (tan $\delta$ peak temp., °C) | -50 | -50 | -52 | -56 | -16 |
| Acetone extraction (%) | 21.5 | 10.2 | 5.5 | 9.9 | 19.5 |
| Rolling resistance[6] | 98 | 92 | 85 | 90 | 100 |
| Break index of ABS car[7] | 115 | 112 | 110 | 109 | 110 |
| Break index of non ABS car[7] | 100 | 100 | 101 | 98 | 100 |

EP 0 500 338 B1

Table 1 (continued)

| Ingredients | Comp. Example 2 | Comp. Example 3 | Comp. Example 4 | Comp. Example 5 | Comp. Example 6 |
|---|---|---|---|---|---|
| Natural rubber | – | – | – | – | – |
| High-cis BR | – | – | – | – | 100 |
| SBR | 137.5[1] | 137.5[1] | 100[2] | 137.5[3] | – |
| ISAF carbon | 90 | 105 | 50 | 90 | 70 |
| Aroma oil | 17 | 35 | – | 17 | 12 |
| Wax | 2 | 2 | 2 | 2 | 2 |
| Antioxidant[4] | 2 | 2 | 2 | 2 | 2 |
| Stearic acid | 2 | 2 | 2 | 2 | 2 |
| Zinc white | 3 | 3 | 3 | 3 | 3 |
| Sulfur | 1.75 | 1.75 | 1.75 | 1.75 | 1.75 |
| Vulcanization[5] accelerator | 1 | 1 | 1 | 1 | 1 |

EP 0 500 338 B1

## Table 1 (continued)

|  | Comp. Example 2 | Comp. Example 3 | Comp. Example 4 | Comp. Example 5 | Comp. Example 6 |
|---|---|---|---|---|---|
| **Tread rubber** |  |  |  |  |  |
| $T_\beta$ (tan δ peak temp., °C) | -16 | -16 | -20 | -45 | -75 |
| Acetone extraction (%) | 23.5 | 27.1 | 4.7 | 23.2 | 9.2 |
| Rolling resistance index[6] | 104 | 107 | 89 | 103 | 88 |
| Break index of ABS car[7] | 111 | 114 | 96 | 98 | 96 |
| Break index of non ABS car[7] | 102 | 105 | 91 | 90 | 85 |

1): solution polymerized SBR containing 30 % by weight of styrene and 40 % by weight of vinyl

2): solution polymerized SBR containing 25 % by weight of styrene and 40 % by weight of vinyl

3): solution polymerized SBR containing 24 % by weight of styrene and 13 % by weight of vinyl

4): N,N'-phenyl-p-phenylenediamine

5): N-cyclohexyl-2-benzothiazyl-sulfeneamide

6): Rolling resistance was measured using an uniaxial drum type tester at a speed of 80 Km/h, an inside pressure of 2.0 Kgf/cm$^2$ and a load of 400 Kg. The number in Table 1 are indexes which are calculated on the basis of the tire of Comparative Example 1 being 100.

7): The speed of a 2,000 cc car or non ABS car equipped with a steel radial tire (size: 195/65R15, inside pressure: 2.0 Kgf/cm$^2$) was reduced from 40 Km/h to 20 Km/h to obtain retardation information. The number in Table 1 are indexes which are calculated on the basis of the tire of Comparative Example 1 being 100. The roads for tests were asphart road.

As is clear from Table 1, the tyres of Examples 1 to 3 are those prepared by changing the amounts of carbon/oil, using NR (natural rubber). In Examples 1 to 3, the rolling resistance and grip property (particularly ABS braking) was improved in comparison with Comparative Example 1. Example 4 was an example wherein NR and NBR were blended. By using in combination with ABS braking the resultant grip property is particularly improved.

7

Comparative Example 1 shows a high performance tyre for passenger cars with a normally known and used tread rubber. In Comparative Examples 2 and 3, the amount of carbon/oil was increased. The braking property was improved but its rolling resistance was inferior. Comparative Example 4 was a typical example of a so-called low fuel cost tyre. Rolling resistance is greatly improved but the braking property was inferior. Comparative Example 5 shows a normal formulation for a tyre for estate cars. Both rolling resistance and braking property were slightly inferior in comparison with Comparative Example 1 while it was superior in wear resistance. Comparative Example 6 was an example wherein BR was used. The rolling resistance was extremely improved but the grip property was inferior.

**Claims**

1. A radial tyre for cars equipped with an anti-lock braking system comprising a tread and a sidewall, characterised in that the tread is formed by a rubber compound containing rubber or rubbers selected only from the group consisting of natural rubber, isoprene rubber and butadiene rubber, wherein said tread rubber has a tan $\delta$ peak value at a temperature ($T_p$) in the range of - 60 to -40°C in a viscosity (tan $\delta$) temperature distribution curve and an acetone extraction of not more than 22%.

2. A tyre according to claim 1 characterised in that the tan $\delta$ peak temperature $T_p$ is in the range of -57 to -43°C.

3. A tyre according to claim 1 or 2 characterised in that the acetone extraction is not more than 15%.

4. A tyre according to claims 1, 2 or 3 characterised in that the tread rubber compound comprises carbon black having a particle size of 15 to 35 $\mu$m.

5. A radial tyre according to any of claims 1 to 4 characterized in that the maximum design load is not more than 1000 Kg.

**Patentansprüche**

1. Radialluftreifen für mit einem Anti-Blockierbremssystem ausgestattete Kraftfahrzeuge mit einer Lauffläche und einer Seitenwand,
dadurch **gekennzeichnet,**
daß die Lauffläche aus einer Kautschukmischung gebildet ist, welche Kautschuk oder Kautschuke nur aus der Gruppe Naturkautschuk, Isoprenkautschuk und Butadienkautschuk enthält, wobei der Laufflächenkautschuk einen tan-delta-Spitzenwert bei einer Temperatur ($T_p$) im Bereich von -60 bis -40°C einer Viskoelastizitäts (tan-delta)-Temperatur-Verteilungskurve und eine Acetonextraktion von nicht mehr als 22% aufweist.

2. Reifen nach Anspruch 1,
dadurch **gekennzeichnet,**
daß die tan-delta-Spitzentemperatur $T_p$ im Bereich zwischen -57 bis -43°C liegt.

3. Reifen nach Anspruch 1 oder 2,
dadurch **gekennzeichnet,**
daß die Acetonextraktion nicht größer ist als 15%.

4. Reifen nach Anspruch 1, 2 oder 3,
dadurch **gekennzeichnet,**
daß die Laufflächenkautschukmischung Ruß mit einer Partikelgröße von 15 bis 35 $\mu$m enthält.

5. Radialluftreifen nach einem der Ansprüche 1 bis 4,
dadurch **gekennzeichnet,**
daß die maximale Lastannahme nicht größer ist als 1.000 kg.

**Revendications**

1. Pneumatique à carcasse radiale pour véhicules automobiles équipés d'un système de freinage antiblocage, comprenant une bande de roulement et un flanc, caractérisé en ce que la bande de roulement est formée d'une composition de caoutchouc contenant un ou plusieurs caoutchoucs choisis uniquement dans le groupe formé par le caoutchouc naturel, le caoutchouc d'isoprène et le caoutchouc de butadiène, le caoutchouc de la bande de roulement a une valeur de crête de tg$\delta$ à une température ($T_p$) comprise entre -60 °C et -40 °C sur la courbe de distribution viscoélasticité (tg$\delta$)-température, et une extraction par l'acétone qui ne dépasse pas 22 %.

2. Pneumatique selon la revendication 1, caractérisé en ce que la température $T_p$ de crête de tg$\delta$ est comprise entre -57 °C et -43 °C.

3. Pneumatique selon la revendication 1 ou 2, caractérisé en ce que l'extraction par l'acétone ne dépasse pas 15 %.

4. Pneumatique selon les revendications 1, 2 et 3, caractérisé en ce que la composition de caoutchouc de la bande de roulement contient du noir de carbone ayant une dimension particulaire comprise entre 15 et 35 $\mu$m.

5. Pneumatique à carcasse radiale selon l'une quelconque des revendications 1 à 4, caractérisé en ce que la charge nominale maximale ne dépasse pas 1 000 kg.